(19) Europäisches Patentamt / European Patent Office / Office européen des brevets

(11) **EP 2 463 520 B1**

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(51) Int Cl.:
*F03D 7/04* *(2006.01)*    *F03D 7/02* *(2006.01)*

(21) Anmeldenummer: **11009623.7**

(22) Anmeldetag: **06.12.2011**

(54) **Verfahren zum Betrieb einer pitchgeregelten Windenergieanlage**

Method of operating a pitch controlled wind turbine

Procédé de fonctionnement d'une éolienne avec réglage de l'angle d'incidence de pale

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2010 DE 102010054014**

(43) Veröffentlichungstag der Anmeldung:
**13.06.2012 Patentblatt 2012/24**

(73) Patentinhaber: **Nordex Energy GmbH**
**22419 Hamburg (DE)**

(72) Erfinder:
• **Kabatzke, Wolfgang**
**21502 Geesthacht (DE)**
• **Rochholz, Hermann**
**39100 Bozen (IT)**

• **Birkemeyer, Jochen**
**22848 Norderstedt (DE)**

(74) Vertreter: **Hauck Patentanwaltspartnerschaft mbB**
**Postfach 11 31 53**
**20431 Hamburg (DE)**

(56) Entgegenhaltungen:
**EP-A2- 1 918 581       EP-A2- 1 939 445**
**EP-A2- 2 177 754       DE-A1- 10 109 553**
**DE-B3-102009 025 445    US-A1- 2010 140 938**

• **VAN DER HOOFT E L ET AL: "Wind turbine control algorithms", ECN LITERATURE REVIEW, XX, XX, Bd. ECN-C-03-111, 1. Dezember 2003 (2003-12-01), Seiten 1-89, XP003008410,**

EP 2 463 520 B1

**Beschreibung**

Die vorliegende Erfindung betrifft ein Verfahren zum Betrieb einer pitchgeregelten Windenergieanlage, bei der abhängig von einer Drehzahl n des Generators oder Rotors ein Sollwert M für das Generatormoment vorgegeben wird. Die Zuordnungsvorschrift für den Sollwert M abhängig von der Drehzahl n besitzt einen Übergangspunkt, in dem ein Übergang von einem Teillastbetrieb in einen Nennlastbetrieb erfolgt. In dem Nennlastbetrieb erfolgt eine Regelung der Drehzahl $n_3$ bei einem Sollwert $M_3$ aus dem Übergangspunkt durch eine Verstellung des Blatteinstellwinkels.

Aus DE 101 09 553 B4 ist ein Verfahren zur Steuerung einer Windenergieanlage mit einem elektrischen Generator unter Verwendung von Luftdichtedaten am Ort der Windenergieanlage bekannt. Bei dem Verfahren wird mittels einer Steuerungsvorrichtung, die die Luftdichtedaten verarbeitet, der Generator der Windenergieanlage gesteuert und abhängig von der Luftdichte Leistungsdaten des Generators eingestellt. Bei dem bekannten Verfahren erfolgt eine Berücksichtigung der Höhe des Aufbauortes der Windenergieanlage über Normalnull, wobei die geringere Luftdichte in der Leistungskennlinie Berücksichtigung findet. Dadurch kann die einer Rotordrehzahl und damit einer bestimmten Schnelllaufzahl zugeordnete, von der Windenergieanlage zu erzeugende Leistung entsprechend angepasst, also herabgesetzt werden, so dass das Generatormoment in Folge einer durch die Steuerungsvorrichtung eingespeisten Erregerleistung das über den Generator bereitgestellte Drehmoment nicht überschreitet. Insgesamt soll der über die Leistungskennlinie festgelegte Wirkungsgrad erhalten bleiben und dem Wind die maximale Energie entnommen werden.

Aus EP 1 939 445 A2 ist ein Verfahren zur Berechnung einer Leistungskurve für hochgelegene Standorte bekannt. Hierbei wird ausgehend von einer Beziehung zwischen dem Leistungskoeffizienten $c_P$ und der Schnelllaufzahl $\lambda$ ein Verhältnis zwischen der elektrischen Ausgangsleistung P und der Windgeschwindigkeit v ermittelt.

Aus EP 1 918 581 A2 ist eine Windenergieanlage bekannt, bei der die Ausgangsleistung reduziert wird, wenn die Temperatur der Umgebungsluft unter einen vorbestimmten Schwellwert sinkt. Hintergrund für die Leistungsreduzierung ist, dass bei Temperaturen von unter - 20° C der Betrieb der Windenergieanlage andere Lastberechnungen erfordern kann.

Aus E.L. van der Hooft et al. "Wind turbine control algorithms", ECN Literature Review Bd. ECN-C-03-111 ist ein Optimierungsverfahren für den Betrieb einer Windenergieanlage im Volllastbereich bekannt. Im Rahmen des Optimierungsverfahrens werden Kurven konstanter Leistung betrachtet.

Aus DE 10 2009 025 445 B3 ist ein Verfahren zum Betrieb einer Windenergieanlage bekannt, bei dem ein meteorologischer Wert erfasst und unter Berücksichtigung des Messwerts ein Sollwert für den Anlagenbetrieb vorgegeben wird. Der Messwert ist dabei ein vom Wind verursachter Luftmassenstrom.

Bei den Auswirkungen der Luftdichte auf den Ertrag der Windenergieanlage ist zu berücksichtigen, dass bei pitchgeregelten Windenergieanlagen es bei einer Veränderung der Luftbedingungen zu aerodynamischen Stalleffekten mit einem unerwünschten Strömungsabriss kommen kann.

Der Erfindung liegt die Aufgabe zugrunde, ein verbessertes Verfahren zum Betrieb einer pitchgeregelten Windenergieanlage bereitzustellen, bei dem die fallende Luftdichte in der Vorgabe des Sollwerts für das Generatormoment berücksichtigt wird und gleichzeitig unerwünschte Stalleffekte an dem Rotorblatt vermieden werden.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Bei dem erfindungsgemäßen Verfahren erfolgt der Betrieb einer pitchgeregelten Windenergieanlage, in dem einem Istwert einer Drehzahl n des Generators oder des Rotors ein Sollwert M für das Generatormoment zugeordnet wird. Allgemein ist bei dem Betrieb der Windenergieanlage zwischen einem Teillastbetrieb und einem Nennlastbetrieb zu unterscheiden. Im Teillastbetrieb wird mit zunehmender

Drehzahl der Sollwert für das Generatormoment erhöht. Im Nennlastbetrieb erfolgt eine Regelung der Drehzahl $n_3$ durch die Verstellung des Blatteinstellwinkels bei einem Sollwert $M_3$.

Der Übergang von dem Teillastbetrieb in den Nennlastbetrieb erfolgt in einem Übergangspunkt, der durch einen Wert für die Drehzahl $n_3$ und einen Sollwert für das Generatormoment $M_3$ definiert ist. Erfindungsgemäß werden die Werte des Übergangspunktes abhängig von einem aktuellen Wert der Luftdichte bestimmt, wobei mit fallender Luftdichte die Drehzahl $n_3$ erhöht und/oder der Sollwert für das Generatormoment $M_3$ reduziert wird. Hierdurch kann sichergestellt werden, dass die Windenergieanlage bei fallender Luftdichte mit höherer Drehzahl und niedrigerem Generatormoment weiter wirtschaftlich und ohne Probleme mit einer stabilen Regelung arbeiten kann. Der Nennlastbetrieb erfolgt dann bei dem erfindungsgemäßen Verfahren mit dem reduzierten Generatormoment $M_3$ aus dem Übergangspunkt. Durch die Anpassung der Drehzahl $n_3$, ab der der Nennlastbetrieb erfolgt, und des Sollwerts für das Generatormoment $M_3$, können unerwünschte aerodynamische Stalleffekte vermieden werden.

Erfindungsgemäß wird die aktuelle Luftdichte $\rho$ abhängig von der gemessenen Lufttemperatur T und einem Luftdruck p unter Berücksichtigung eines Wertes für die Luftfeuchte $\Psi$ bestimmt. Die relative Luftfeuchte kann insbesondere bei der Aufstellung der Windenergieanlagen an Orten mit hoher Umgebungstemperatur, wo die Luft viel Feuchtigkeit aufnehmen kann, und auf Bergen oder Hügeln, bei denen mit Wolkenbildung, Nebel und dergleichen zu rechnen ist, einen nicht unerheblichen Einfluss auf die Luftdichte haben. Erfindungsgemäß wird der Wert $\Psi$ für die Luftfeuchte

abhängig von einer Tages- und/oder Jahreszeit vorgegeben.

Um unerwünschte Stalleffekte an dem Rotorblatt noch besser zu vermeiden, erfolgt bevorzugt bereits im Teillastbetrieb eine Verstellung des Blatteinstellwinkels auf einen minimalen Blatteinstellwinkel. Das Rotorblatt geht dann in den durch die Luftdichte vorgegebenen Nennlastbetrieb mit einem minimalen Blatteinstellwinkel über.

In der bevorzugten Ausgestaltung wird für die Windenergieanlage der Übergang vom Teillastbetrieb in den Nennlastbetrieb abhängig von der Luftdichte variiert. Zugleich erfolgt ein "Vorpitchen" des Rotorblatts im Teillastbetrieb, so dass bei dem Eintritt in den Nennlastbetrieb das Rotorblatt nicht die maximal mögliche Leistung aus dem Wind aufnimmt.

In einer bevorzugten Weiterbildung des erfindungsgemäßen Verfahrens ist der Wert des minimalen Blatteinstellwinkels ebenfalls von der Luftdichte abhängig gewählt. Auf diese Weise kann festgelegt werden, mit welchem minimalen Blatteinstellwinkel das Rotorblatt in den Nennlastbetrieb eintritt.

In einer bevorzugten Ausgestaltung ist bei der Zuordnung des Sollwerts für das Generatormoment abhängig von der Drehzahl ein vorbestimmter Knickpunkt ($n_2$, $M_2$) vorgesehen, ab dem ein linearer Anstieg des Sollwerts für das Generatormoment bis zum Nennlastbetrieb erfolgt. Dieser vorbestimmte Knickpunkt markiert in der Regel den Übergang von einem Bereich, in dem abhängig von der Drehzahl und dem Leistungskoeffizienten des Rotorblatts eine optimale Vorgabe des Sollwerts für das Drehmoment erfolgt und einem Bereich, in dem es zu einer schnellen Erhöhung des Sollwerts für das Generatormoment mit zunehmender Drehzahl kommt.

In einer bevorzugten Ausgestaltung wird der Sollwert $M_2$ für das Generatormoment bei gleichbleibender Drehzahl $n_2$ mit sinkender Luftdichte abgesenkt. Diesem

Ansatz entspricht die Überlegung, dass die ideale Leistungsaufnahme des Rotors proportional zur Luftdichte ist, so dass mit fallender Luftdichte eine geringere optimale Leistung mit dem Rotorblatt aufgenommen werden kann. Mithin wird für den Knickpunkt ($n_2$, $M_2$) der Übergang zum linearen Anstieg mit sinkender Luftdichte auch zu geringeren Sollwerten für das Generatormoment verschoben.

Ein bevorzugtes Ausführungsbeispiel wird nachfolgend anhand der Figuren näher erläutert. Es zeigt:

Fig. 1    die Kennlinie für den Sollwert des Generatormoments abhängig von der Generatordrehzahl,

Fig. 2    ein Flussdiagramm zur Berechnung der Drehzahländerung und der Sollwertänderung für das Generatormoment abhängig von der Lufttemperatur, dem Luftdruck und der Luftfeuchte,

Fig. 3    die Kennlinie für den Sollwert des Generatormoments abhängig von der Generatordrehzahl mit ihrem verschobenen Verlauf bei einer sinkenden Luftdichte und

Fig. 4    den Verlauf des Blatteinstellwinkels abhängig von der Generatordrehzahl.

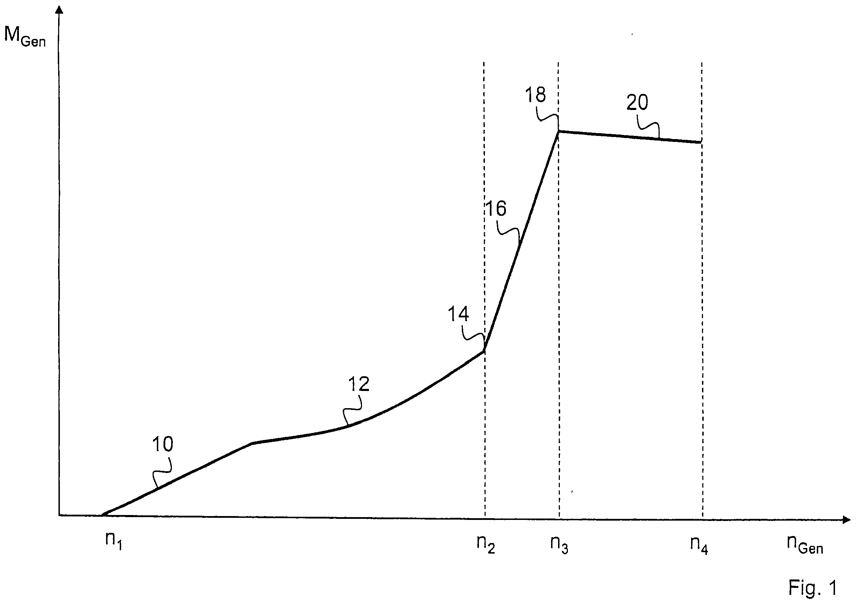

Fig. 1 zeigt beispielhaft den Verlauf einer Kennlinie, die den Sollwert des Generatormoments $M_{Gen}$ abhängig von der Generatordrehzahl $n_{Gen}$ zeigt. Die Kennlinie unterscheidet hierbei vier Abschnitte. In einem ersten Abschnitt 10 erfolgt ein lineares Ansteigen des Sollwerts für das Generatormoment $M_{Gen}$ mit zunehmender Generatordrehzahl $n_{Gen}$.

In einem zweiten Abschnitt 12 folgt die Kennlinie der idealen Kennlinie des Rotors. Der Sollwert für das Generatormoment wird über eine Funktion für die optimale Leistung $P_{opt}$ berechnet, die wie folgt lautet:

$$P_{opt}(n) = \left( 2 * \pi * R * \frac{n}{\ddot{U}_{Getr}} * \frac{1}{60 * \lambda_{opt}} \right)^3 * \pi * R^2 * \frac{\rho}{2} * cp_{opt} \quad ,$$

wobei R den Radius des Rotors bezeichnet, n die Generatordrehzahl, $\ddot{U}_{Getr}$ das Übersetzungsverhältnis des Getriebes, $\lambda_{opt}$ die optimale Schnelllaufzahl des Rotorblatts, $\rho$ die Luftdichte und $cp_{opt}$ den optimalen Leistungskoeffizienten. Entlang dem Abschnitt 12 der Kennlinie wird der Sollwert für das Generatormoment analytisch gemäß der vorstehenden Formel berechnet.

In Punkt 14 liegt ein Knickpunkt zwischen dem zweiten Abschnitt 12 und einem dritten Abschnitt 16 der Kennlinie vor. Mit dem Abschnitt 16 wird zur Erzielung einer optimalen Energieausbeute die ideale Kennlinie 12 verlassen und der Sollwert für das Generatormoment mit zunehmender Drehzahl des Generators stärker erhöht. In dem dargestellten Ausführungsbeispiel ist der Kennlinienabschnitt 16 als ein linear ansteigender Abschnitt dargestellt. Andere nicht lineare Formen des Anstiegs zwischen dem Knickpunkt 14 und einem Übergangspunkt 18 sind ebenfalls möglich. In dem Übergangspunkt 18 geht die Windenergieanlage in ihren Nennlastbetrieb über. In diesem Bereich gilt, dass die Leistung der Windenergieanlage konstant zu halten ist, wobei die Leistung P proportional zur Drehzahl und zum Drehmoment des Generators ist:

$$P = M * \omega$$

wobei $\omega = 2\,\pi\,n_{Gen}$ die Kreisfrequenz des Generators ist.

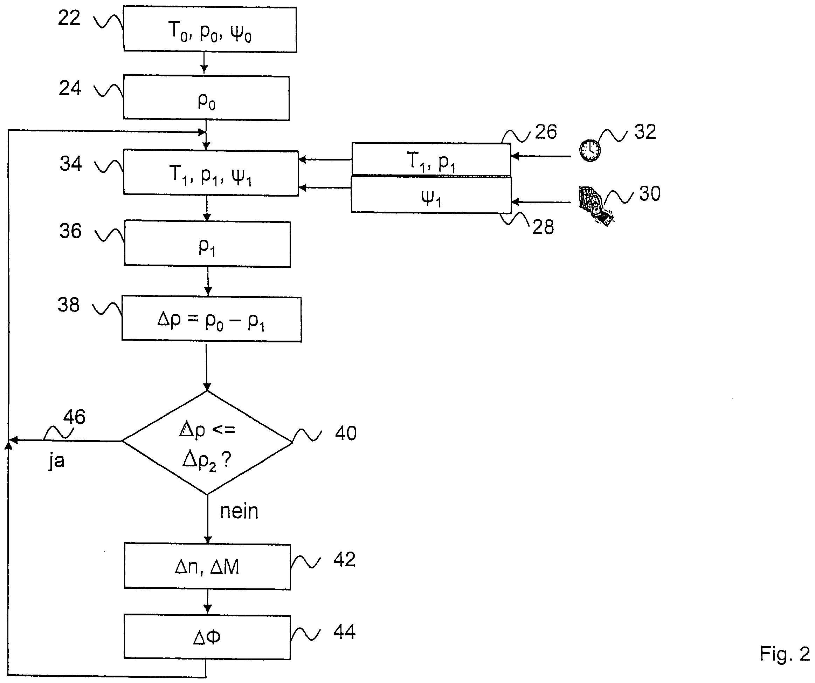

Fig. 2 beschreibt in einem Flussdiagramm, wie sich die Drehzahl und der Sollwert des Drehmoments im Übergangspunkt 18 abhängig von der Luftdichte ändern. Hierzu wird in einem Verfahrensschritt 24, ausgehend von der Umgebungstemperatur $T_0$, die die Lufttemperatur der Umgebung bei Normalnull angibt, einem Luftdruck $p_0$, der den Luftdruck bei Normalnull angibt und einem Wert für die Luftfeuchte $\Psi_0$, der die Luftfeuchte bei Normalnull angibt, eine Luftdichte $\rho_0$ für Normalnull berechnet.

Die Berechnung der Luftdichte unter Einbeziehung der Luftfeuchte erfolgt in an sich bekannter Weise.

An der Windenergieanlage wird durch Sensoren die Lufttemperatur am Arbeitspunkt $T_1$ sowie der Luftdruck am Arbeitspunkt $p_1$ in Schritt 26 erfasst. Ein Wert für die Luftfeuchte $\Psi_1$ am Arbeitspunkt wird entweder per Parametervorgabe aus einer Datenquelle 30 oder anhand einer vorbestimmten Zeitfunktion 32 bereitgestellt. Ein Parameter für die Luftfeuchte am Arbeitspunkt $\Psi_1$ kann beispielsweise jahreszeitlich bedingt oder abhängig von der Tageszeit vorgegeben werden.

Die Größen für Lufttemperatur, Luftdruck und Luftfeuchte liegen in Verfahrensschritt 34 für den Arbeitspunkt der Windenergieanlage vor und werden in Schritt 36 zu einer Luftdichte für den aktuellen Arbeitspunkt $\rho_1$ umgerechnet. Die Berechnung der Luftdichte in Schritt 36 erfolgt ebenso wie in Schritt 24 in an sich bekannter Weise.

In Verfahrensschritt 38 wird eine Änderung der Luftdichte $\Delta\rho$ bestimmt. Der Unterschied der Luftdichte $\Delta\rho$ ergibt sich aus der in Schritt 24 berechneten Luftdichte für Normalnull $\rho_0$ und der in Schritt 36 berechneten Luftdichte für den aktuellen Arbeitspunkt $\rho_1$. In einem nachfolgenden Verfahrensschritt 40 wird überprüft, ob die Änderung der Luftdichte $\Delta\rho$ einen maximalen Wert für die Änderung der Luftdichte $\Delta\rho_2$ überschreitet. Für den Fall, dass die festgestellte

Änderung der Luftdichte $\Delta\rho$ in dem Verfahrensschritt 40 die maximal zulässige Änderung der Luftdichte $\Delta\rho_2$ überschreitet, wird in einem nachfolgenden Schritt 42 eine Änderung der Generatordrehzahl $\Delta n$ und eine Änderung des Generatormoments $\Delta M$ berechnet. Die Berechnung in Schritt 42 erfolgt wie folgt:

$$\Delta n = x\,\Delta n\,(n_2) + \Delta n_0$$

$$\Delta M = y\,\Delta M\,(n_2) + \Delta M_0,$$

wobei x, y parametrisierbare Konstanten, $\Delta M\,(n_2)$ die Änderung des Sollwertes für das Generatormoment bei der Drehzahl $n_2$ und $\Delta n_0$ sowie $\Delta M_0$ anlagenspezifische Konstanten sind. Um $\Delta M\,(n_2)$ zu berechnen, wird für $n_2$ die Drehzahl im Knickpunkt gewählt, in dem die Kennlinie aus dem zweiten Abschnitt 12 in den steil ansteigenden dritten Abschnitt 16 der Kennlinie übergeht. Der Vorteil dieser Definition für $\Delta M\,(n_2)$ liegt darin, dass der Wert sich als Endpunkt des zweiten Abschnitts analytisch berechnen lässt.

Neben der Bestimmung der Größen $\Delta n$ und $\Delta M$ in Schritt 42 wird in Schritt 44 auch eine Größe $\Delta\Phi$ für den Blatteinstellwinkel berechnet, die von der Luftdichte $\rho_1$ im Arbeitspunkt abhängig ist, die in Schritt 36 ermittelt wurde.

Wird bei Abfrage in Schritt 40 festgestellt, dass die im Verfahrensschritt 38 berechnete Änderung der Luftdichte $\Delta\rho$ kleiner als die maximal zulässige Änderung der Luftdichte $\Delta\rho_2$ ist oder gleich der maximal zulässigen Änderung der Luftdichte $\Delta\rho_2$ ist, kehrt das Verfahren über die Verzweigung 46 wieder zu Verfahrensschritt 34 zurück, um erneut einen Wert der Luftdichte im Arbeitspunkt $\rho_1$ zu berechnen.

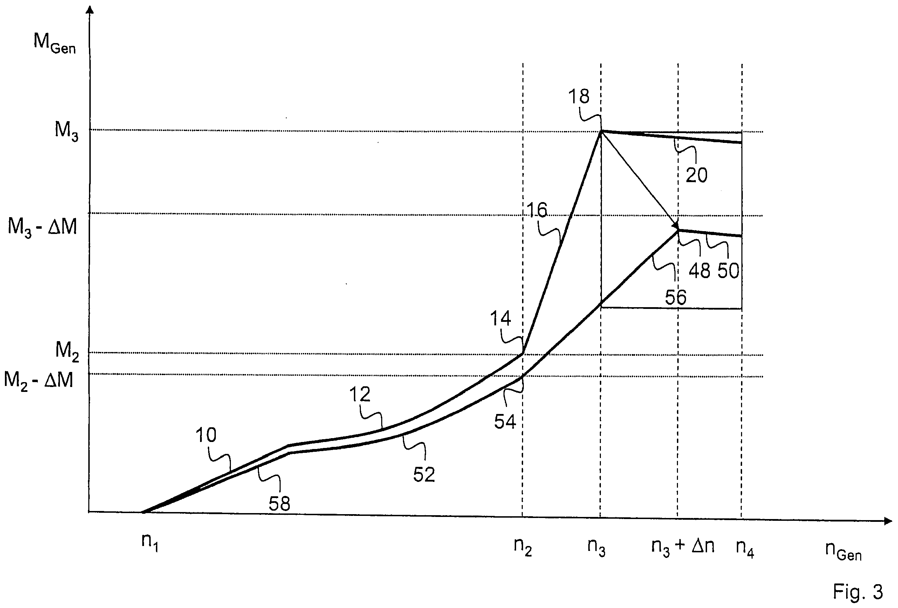

Fig. 3 zeigt eine Veränderung der Kennlinie bei sinkender Luftdichte. Deutlich zu erkennen ist, dass der Übergangspunkt 18 zu einem neuen Übergangspunkt 48 verschoben wird. Berücksichtigt man das Verfahren zur Korrektur der Kennlinie, kann dieses auch als autokorrigierte Steuerfunktion verstanden werden. Die Verschiebung des Übergangspunktes bedeutet:

$$(n_3, M_3) \rightarrow (n_3 + \Delta n, M_3 - \Delta M),$$

wobei $n_3$ und $M_3$ den Übergangspunkt 18 der nicht verschobenen Kennlinie kennzeichnen und $n_3 + \Delta n$ die Drehzahl des verschobenen Übergangspunktes und $M_3 - \Delta M$ den Sollwert des Generatormoments des verschobenen Übergangspunktes bezeichnen.

Wichtig an der vorstehenden Verschiebung des Übergangspunktes ist, dass hier nicht allein eine Absenkung des Sollwerts für das Generatormoment erfolgt, sondern zugleich auch eine Erhöhung der Drehzahl vorgesehen ist, ab der die Windenergieanlage in den Nennlastbetrieb wechselt. Der Abschnitt der Kennlinie, der den Nennlastbetrieb bei abgesenkter Luftdichte bezeichnet, ist anknüpfend an den Übergangspunkt 48 als Kennlinienabschnitt 50 dargestellt. Wie in Fig. 3 vermerkt, ist die Änderung des Übergangspunkts 18 hin zu dem neuen Übergangpunkt 48 abhängig von der Temperatur, dem Luftdruck und der Luftfeuchte.

Wie ferner in Fig. 3 dargestellt, kann für den Generator je nach Bauart eine maximale Generatordrehzahl $n_4$ definiert sein. Sollte die sich ausgehend vom Übergangspunkt 18 ergebende neue Drehzahl $n_3 + \Delta n$ größer als der maximal zulässige Wert für die Generatordrehzahl $n_4$ sein, so wird die Drehzahl nicht weiter erhöht, sondern es erfolgt eine Erhöhung der Drehzahl nur bis zur maximal zulässigen Generatordrehzahl. In diesem Beispiel kann auch die Absenkung des Sollwerts des Generatormoments um $\Delta M$ ausgehend von dem Übergangspunkt 18 noch angepasst werden: Eine Möglichkeit für die Anpassung ist durch die Randbedingung gegeben, dass:

$$(\Delta n)^2 + (\Delta M)^2 = \text{konstant.}$$

Dies bedeutet, dass ausgehend vom Übergangspunkt 18 eine Erhöhung der Generatordrehzahl für den neuen Übergangspunkt 48 lediglich bis zur maximal zulässigen Generatordrehzahl $n_4$ erfolgt. Andererseits erfolgt unter Konstanthaltung des sich bei einer nicht beschränkten Erhöhung der Drehzahl ergebenden Abstandes zwischen den Übergangspunkten 18 und 48 die Absenkung des Sollwerts für das Generatormoment. Die Absenkung des Sollwertes für das Generatormoment erfolgt dabei entlang einem gedachten Kreis, dessen Mittelpunkt der Übergangspunkt 18 bildet und dessen Radius sich zu $\sqrt{(\Delta n)^2 + (\Delta M)^2}$ bestimmt.

In der vorbeschriebenen Verschiebung des Übergangspunkts für den Nennbetrieb bei sinkender Luftdichte verändern sich auch die weiteren Kennlinienabschnitte. Der Kennlinienabschnitt 12 ist, wie es sich direkt aus der weiter obenstehenden Formel ergibt, proportional zur Luftdichte, so dass der zweite Kennlinienabschnitt 12 sich insgesamt zu kleineren Sollwerten für das Generatormoment verschiebt. Der geänderte Kennlinienabschnitt 52 bedeutet auch, dass der Knickpunkt 14 für das Verlassen des zweiten Kennlinienabschnitts sich insgesamt zu kleineren Sollwerten für das Generatormoment verschiebt. Der verschobene Knickpunkt 54 ist dadurch gekennzeichnet, dass nur der Sollwert für das Generatormoment aufgrund des Kennlinienabschnitts 52 abgesenkt wird, nicht aber der Wert für die Drehzahl. Der verschobene Knickpunkt 54 und der verschobene Übergangspunkt 48 führen zu einem dritten Kennlinienabschnitt 56, der flacher als der dritte Kennlinienabschnitt 16 verläuft.

Ebenfalls ergibt sich aus dem Absenken des zweiten Kennlinienabschnitts 12 für den ersten Kennlinienabschnitt 10 in dem erfindungsgemäßen Verfahren ein flacherer Verlauf, der durch Kennlinienabschnitt 58 dargestellt ist.

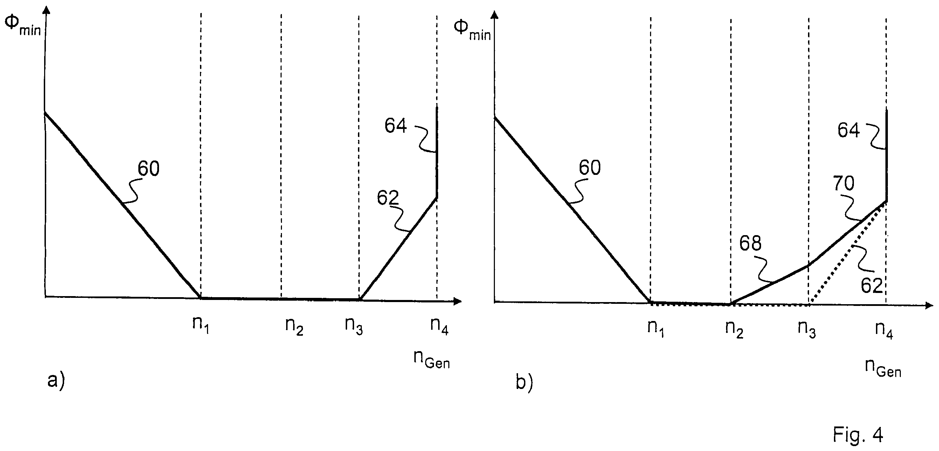

Fig. 4 zeigt den Verlauf des minimalen Blatteinstellwinkels abhängig von der Drehzahl. In Fig. 4 a ist der herkömmliche Betrieb einer Windenergieanlage gemäß Stand der Technik dargestellt. Für die Windenergieanlage ist in einem Normalbetrieb der minimale Blatteinstellwinkel bis zu einer Drehzahl von $n_1$ durch die Linie 60 beschränkt. Erst nach Übergang in den Nennlastbetrieb bei der Drehzahl $n_3$ erfolgt eine Begrenzung des minimalen Blatteinstellwinkels durch die Kurve 62, die linear ansteigt.

Das Diagramm ist hierbei so zu lesen, dass abhängig von der Generatordrehzahl der minimal zugelassene Blatteinstellwinkel vorgegeben wird.

Bei dem erfindungsgemäßen Verfahren, das in Fig. 4b dargestellt ist, erfolgt eine Vorgabe eines minimal zugelassenen Blatteinstellwinkels bereits ab einer Drehzahl $n_2$. Es wird also noch vor einem Übergang in den Nennlastbetrieb bei der Drehzahl $n_3$ ein minimaler Blatteinstellwinkel gemäß dem Kurvenabschnitt 68 vorgegeben. Im Nennlastbetrieb erfolgt dann eine Vorgabe des minimalen Blatteinstellwinkels gemäß dem Kurvenabschnitt 70, wobei der minimale Blatteinstellwinkel gemäß Kurvenabschnitt 70 größer als in dem Kurvenabschnitt 62 ist.

In dem dargestellten Ausführungsbeispiel gemäß Fig. 4b erfolgt für den schallreduzierten Betrieb keine luftdichtenabhängige Anpassung des minimalen Blatteinstellwinkels, so dass die Kurve 62 im Wesentlichen unverändert ist.

**Patentansprüche**

1. Verfahren zum Betrieb einer pitchgeregelten Windenergieanlage mit einem Rotor und einem Generator, bei der abhängig von einer Drehzahl (n) des Generators oder des Rotors ein Sollwert für das Generatormoment (M) vorgegeben wird, wobei ein Übergangspunkt ($n_3$, $M_3$) vorgesehen ist, in dem ein Übergang aus einem Teillastbetrieb in einen Nennlastbetrieb erfolgt, wobei eine Regelung der Drehzahl durch die Verstellung des Blatteinstellwinkels bei einem Sollwert ($M_3$) aus dem Übergangspunkt erfolgt,
**dadurch gekennzeichnet, dass**

   - ein aktueller Wert für die Luftdichte (p) berechnet wird und

- die Werte ($n_3$, $M_3$) des Übergangspunktes abhängig von dem aktuellen Wert für die Luftdichte (p) bestimmt werden, wobei mit fallender Luftdichte (p) die Drehzahl ($n_3$) erhöht und/oder der Sollwert für das Generatormoment ($M_3$) reduziert wird, wobei die aktuelle Luftdichte (p) abhängig von einer gemessenen Lufttemperatur (T) und einem gemessenen Luftdruck (p) unter Berücksichtigung eines Wertes für die Luftfeuchte ($\Psi$) bestimmt wird, der abhängig von einer Tages- und/oder Jahreszeit vorgegeben wird.

2. Verfahren nach Anspruch 1, **dadurch gekennzeichnet, dass** bereits im Teillastbetrieb eine Verstellung des Blatteinstellwinkels auf einen minimalen Blatteinstellwinkel erfolgt.

3. Verfahren nach Anspruch 2, **dadurch gekennzeichnet, dass** der Wert des minimalen Blatteinstellwinkels von der Luftdichte (p) abhängig gewählt wird.

4. Verfahren nach einem der Ansprüche 1 bis 3, **dadurch gekennzeichnet, dass** die Kennlinie einen vorbestimmten Punkt ($n_2$, $M_2$), aufweist, ab dem ein linearer Anstieg des Sollwerts für das Generatormoment bis zum Nennlastbetrieb erfolgt.

5. Verfahren nach Anspruch 4, **dadurch gekennzeichnet, dass** der Sollwert für das Generatormoment ($M_2$) bei gleichbleibender Drehzahl ($n_2$) mit sinkender Luftdichte (p) abgesenkt wird.

## Claims

1. A method of operating a pitch controlled wind turbine with a rotor and a generator, in which a desired value for the generator torque (M) is preset depending on a rotational speed (n) of the generator or of the rotor, a transition point ($n_3$, $M_3$) being provided at which a transition from a partial-load operation to a nominal load operation takes place, wherein a control of the rotational speed is done by the adjustment of the blade pitch angle at a desired value ($M_3$) from the transition point,
   **characterised in that**

   • an actual value for the air density (p) is calculated, and

   • the values ($n_3$, $M_3$) of the transition point are determined depending on the actual value for the air density (p), wherein the rotational speed ($n_3$) is increased and/or the desired value for the generator torque ($M_3$) is reduced when the air density (p) decreases, the actual air density (p) being determined depending on a measured air temperature (T) and a measured air pressure (p), taking into consideration a value for the air humidity ($\Psi$), which is preset depending on a daytime and/or a season.

2. The method according to claim 1, **characterised in that** an adjustment of the blade pitch angle to a minimum blade pitch angle is performed already in the partial-load operation.

3. The method according to claim 2, **characterised in that** the value of the minimum blade pitch angle is chosen depending on the air density (p).

4. A method according to any one of the claims 1 to 3, **characterised in that** the characteristic line has a preset point ($n_2$, $M_2$) from on which a linear increase of the desired value for the generator torque takes place up to the nominal load operation.

5. The method according to claim 4, **characterised in that** the desired value for the generator torque ($M_2$) is decreased when the air density (p) decreases upon unchanged rotational speed ($n_2$).

## Revendications

1. Procédé de fonctionnement d'une éolienne ayant un rotor et un générateur avec réglage de l'angle d'incidence de pale, dans lequel une valeur de consigne pour la couple du générateur (M) est donnée en fonction d'une vitesse de rotation (n) du générateur ou du rotor, un point de transition ($n_3$, $M_3$) étant prévu chez lequel une transition à partir d'un fonctionnement en charge partielle à un fonctionnement en charge nominale est faite, un réglage de la vitesse de rotation par le changement de l'angle d'incidence de pale ayant lieu à partir du point de transition chez une valeur de consigne ($M_3$),
**caractérisé en ce que**

- une valeur actuelle pour la densité atmosphérique (p) est calculée, et

- les valeurs ($n_3$, $M_3$) du point de transition sont déterminées en fonction de la valeur actuelle pour la densité atmosphérique (p), la vitesse de rotation ($n_3$) étant augmentée et/ou la valeur de consigne pour la couple du générateur ($M_3$) étant réduite quand la densité atmosphérique (p) décroît, la densité atmosphérique (p) étant déterminée en fonction d'une température ambiante mesurée (T) et une pression atmosphérique (p) mesurée, prenant en compte une valeur pour la humidité de l'air ($\Psi$), qui est donnée en fonction d'une heure de jour et/ou une saison.

2. Procédé selon la revendication 1, **caractérisé en ce qu'**un changement de l'angle d'incidence de pale à un angle d'incidence de pale minimal est fait déjà dans le fonctionnement en charge partielle.

3. Procédé selon la revendication 2, **caractérisé en ce que** la valeur de l'angle d'incidence de pale minimal est choisie en fonction de la densité atmosphérique (p).

4. Procédé selon l'une quelconque des revendications 1 à 3, **caractérisé en ce que** la courbe caractéristique a un point ($n_2$, $M_2$) prédéterminé à partir duquel une croissance linéaire de la valeur de consigne pour la couple du générateur se fait jusqu'au fonctionnement en charge nominale.

5. Procédé selon la revendication 4, **caractérisé en ce que** la valeur de consigne pour la couple du générateur ($M_2$) est diminuée chez vitesse de rotation ($n_2$) constante quand la densité atmosphérique (p) décroît.

Fig. 1

Fig. 2

$T_0, p_0, \psi_0$ — 22

$\rho_0$ — 24

26

$T_1, p_1$

$\psi_1$

28

32

30

$T_1, p_1, \psi_1$ — 34

$\rho_1$ — 36

$\Delta\rho = \rho_0 - \rho_1$ — 38

$\Delta\rho <= \Delta\rho_2$ ? — 40

nein

$\Delta n, \Delta M$ — 42

$\Delta\Phi$ — 44

ja — 46

Fig. 3

EP 2 463 520 B1

Fig. 4

**IN DER BESCHREIBUNG AUFGEFÜHRTE DOKUMENTE**

**In der Beschreibung aufgeführte Patentdokumente**

- DE 10109553 B4
- EP 1939445 A2
- EP 1918581 A2
- DE 102009025445 B3

**In der Beschreibung aufgeführte Nicht-Patentliteratur**

- **AUS E.L. VAN DER HOOFT et al.** Wind turbine control algorithms. *ECN Literature Review Bd. ECN-C-03-111*